Europäisches Patentamt

European Patent Office

Office européen des brevets

(19)

(11) Publication number: **0 421 431 B1**

## EUROPEAN PATENT SPECIFICATION

(12)

(45) Date of publication of patent specification :
21.06.95 Bulletin 95/25

(51) Int. Cl.⁶ : **G06F 1/32**

(21) Application number : **90119067.8**

(22) Date of filing : **04.10.90**

(54) **A computer system with a sleep function.**

(30) Priority : **06.10.89 JP 261566/89**

(43) Date of publication of application :
**10.04.91 Bulletin 91/15**

(45) Publication of the grant of the patent :
**21.06.95 Bulletin 95/25**

(84) Designated Contracting States :
**DE FR GB**

(56) References cited :
**PATENT ABSTRACTS OF JAPAN, vol. 7, no. 224 (P-227)[1369], 5th october 1983; & JP-A-58 115 513
IBM TECHNICAL DISCLOSURE BULLETIN, vol. 29, no. 9, February 1987, pages 4122-4124, New York, US; "System power savings by automatic sleep mode"**

(56) References cited :
**IBM TECHNICAL DISCLOSURE BULLETIN, vol. 33, no. 4, September 1990, pages 474-477, New York, US; "Technique for monitoring a computer system's activity for the purpose of power management of a DOS-compatible system"**

(73) Proprietor : **KABUSHIKI KAISHA TOSHIBA
72, Horikawa-cho
Saiwai-ku
Kawasaki-shi Kanagawa-ken 210 (JP)**

(72) Inventor : **Watanabe, Minoru, c/o Intellectual Property Div.
Kabushiki Kaisha Toshiba,
1-1 Shibaura 1-chome
Minato-ku, Tokyo 105 (JP)**

(74) Representative : **Henkel, Feiler, Hänzel & Partner
Möhlstrasse 37
D-81675 München (DE)**

## Description

This invention relates to personal computers, especially to the computer system equipped with the sleep mode function to save power consumption of the system by controlling clock feed to the CPU when the CPU is idle in which it does not execute effective data processing.

Lap-top-type personal computers have recently been developed which use a battery (rechargeable internal battery) for the system power source. This type of computer requires means for saving power because the continuous power consuming time is limited. The sleep mode function is a means to save power by stopping CPU (microprocessor) operation or decreasing the operation speed. While there is not need to input or output data, it is possible to stop CPU operation or decrease the operation speed. The CPU operation speed is determined by the clock pulse frequency. Therefore, to decrease the CPU operation speed, high-frequency clock pulse to be fed to CPU in the normal mode is changed to low-frequency clock pulse and fed to it in the sleep mode. To stop CPU operation, feeding the clock pulse to CPU is stopped.

The prescribed condition to shift to the sleep mode is, for example, the case in which no data is keyboarded and it is detected that CPU does not execute effective data processing (idle). The above sleep mode function is disclosed, for example, in document US-A-5 083 226.

To shift to the sleep mode, it is necessary to detect that CPU does not execute effective data processing. It has been necessary so far to provide the application program with the function to detect that CPU does not execute effective data processing when the user executes the application program. Concretely, BIOS (Basic Input Output System) previously prepared for personal computers sets a flag when it receives a response (interrupt operation) from an input/output device (e.g. keyboard). Unless the flag is set, the application program executes operation in the sleep mode because it decides that no data is input or output (that is, CPU does not execute effective data processing). The sleep mode is released when an interrupt from the input/output device occurs. As mentioned above, it has been necessary so far to develop the application program considering the sleep mode in order to make the sleep mode function effectively. Therefore, it is not easy to develop the application program and also the efficiency for execution of the application program decreases.

Prior art document IBM Technical Disclosure Bulletin, vol. 29, no. 9, Febr. 1987, Armonk, New York, USA, pages 4122 to 4124, "System power savings by automatic sleep mode", discloses a microcomputer system with various sleep modes, including a CPU, I/O means, clock generator means, register means for storing the data to designate that there is no keystroke ready for the BIOS, and sleep control means for setting the sleep mode according to the data stored in the register means.

Further, prior art document Patent Abstracts of Japan, vol. 7, no. 224, (P-227) [1369], 5th October 1983; & JP-A-58 115 513 (Fujitsu K. K.), 9th July 1983, describes clock frequency dividing means to generate a low-frequency clock signal obtained by dividing the clock signal sent from the clock generator means, and selecting means to supply to a processor either the low-frequency clock signal or a high-frequency clock signal.

It is an object of the present invention to provide a computer system suitable to effectively execute the sleep function even for the application program considering no sleep mode by installing the means to decide the state in which CPU does not execute effective data processing in the computer system having the sleep mode function.

To solve this object the present invention provides a computer system as specified in claim 1.

The computer system is equipped with a clock generation circuit to generate clock pulses necessary for operation of the CPU to execute various data processings and feed the clock to the CPU, a register to latch data to designate that the CPU is idle in which it does not execute effective data processing, and a sleep control unit to set the sleep mode according to the data stored in the register and stop feeding the said clock pulse to the CPU from the said clock generation circuit.

The sleep control unit stops feeding the clock pulse to the CPU and the CPU operation in the sleep mode. This makes it possible to save power consumption when the CPU is idle in which it does not execute effective data processing.

This invention can be more fully understood from the following detailed description when taken in conjunction with the accompanying drawings, in which:

Fig. 1 is the block diagram showing main section of the computer system related to an embodiment of this invention;

Fig. 2 is the block diagram showing the sleep mode indicator related to the said embodiment;

Figs. 3A through 3C show the timing chart to describe the operation of the CPU related to the said embodiment;

Figs. 4A through 4C show the timing chart to describe the operation of the system related to the said embodiment;

Figs. 5 through 8 show the flow chart to describe the operation of the system related to the said embodiment;

Fig. 9 is the block diagram showing a modified example of the block control circuit related to said embodiment; and

Fig. 10 is the block diagram showing the entire configuration of the computer system related to another embodiment of this invention.

The following describes embodiments of this invention according to drawings.

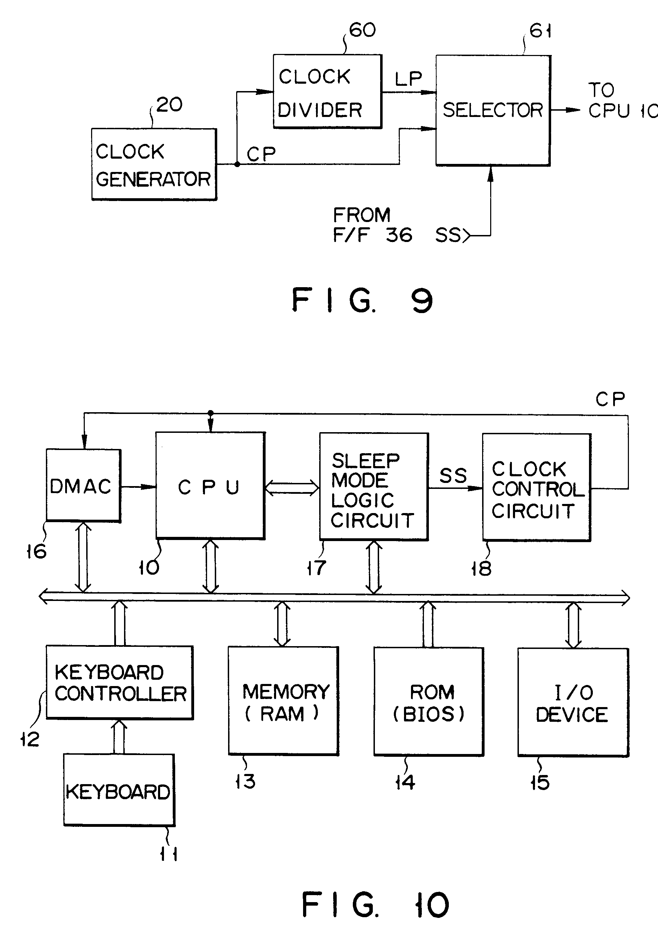

The computer system in the said embodiment is a lap-top-type personal computer which is driven by a rechargeable battery. This system, as shown in Fig. 10, is equipped with microprocessor 10 configuring a central processing unit (CPU), keyboard 11, keyboard controller (KBC) 12, memory 13, ROM (read only memory) 14 storing BIOS, and I/O (Input/Output) device 15. Keyboard 11 and KBC 12 configure an input unit to input data through operation of various keys on keyboard 11. Memory 13 comprises a read/write memory (RAM), which configures various registers including the key buffer to store data input from keyboard 11. ROM 14 stores BIOS to execute input/output control operations. I/O device 15 is an input/output device other than keyboard 11, which is for example, an external memory such as a floppy disk drive. Moreover, this system has DMA controller (DMAC) 16, sleep mode logic circuit 17, and clock control circuit 18. DMA controller 16 is a circuit to control direct memory access. Sleep mode logic circuit 17 is a circuit to execute the sleep mode function.

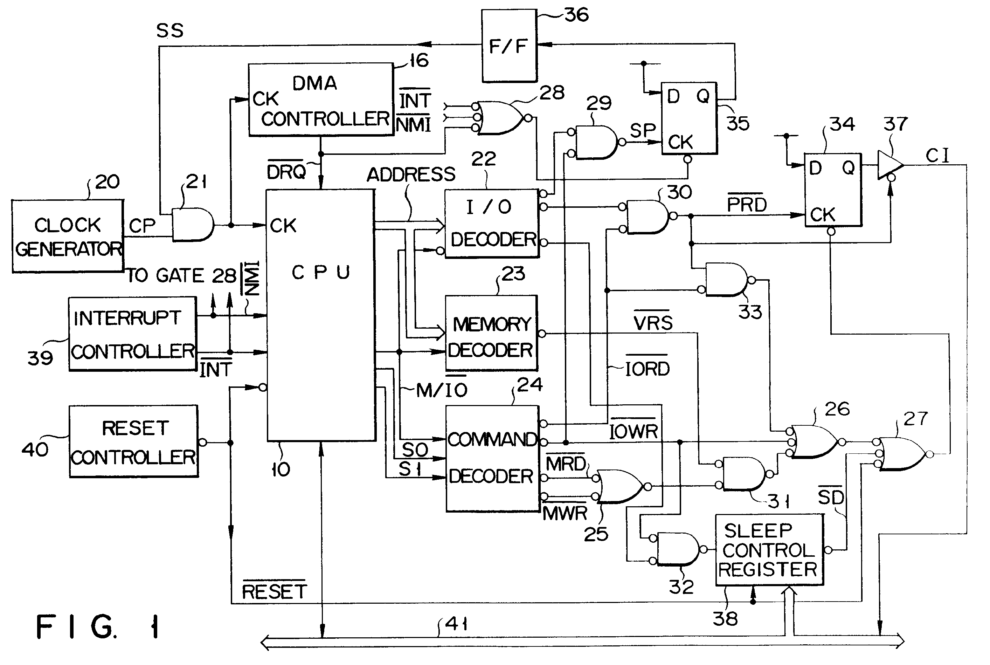

Clock control circuit 18 is a circuit to feed clock pulse CP to each clock terminal CK of CPU 10 and DMA controller 16. Clock control circuit 18, as shown in Fig. 1, has clock generator 20 to generate the clock pulse CP to determine the operation speed of CPU 10 and AND gate 21. AND gate 21 is gate-controlled by the control signal SS output from circuit 17 to transfer the clock pulse CP output by clock control circuit 18 to each clock terminal CK of CPU 10 and controller 16.

Fig. 1 shows the detailed block diagram of sleep mode logic circuit 17 and peripheral logic circuits of CPU 10. The peripheral logic circuit has I/O decoder 22, memory decoder 23, and command decoder 24. I/O decoder 22 outputs the I/O select signal to access I/O device 15. Memory decoder 23 outputs the video RAM select signal $\overline{VRS}$ for memory access in said embodiment. The video RAM select signal $\overline{VRS}$ is the control signal to designate the video RAM to store the data to be displayed on the screen of the display unit which is one of I/O device 15. When command decoder 24 accesses the memory or I/O device 15, it decodes the control signal (memory/I/O select signal $M/\overline{IO}$) sent from CPU 10 to output the memory read control signal $\overline{MRD}$, memory write control signal $\overline{MWR}$, I/O read control signal $\overline{IORD}$, and I/O write control signal $\overline{IOWR}$.

The peripheral logic circuit has various types of logic gate circuits. Various types of logic gate circuits use OR gates 25 through 28 for reverse input and reverse output, AND gates 29 through 32 for reverse input and reverse output, and NAND gate 33 for reverse input at one side. The peripheral logic circuit has flip-flop circuits 34 and 35 to latch data, flip-flop circuit 36 to configure the synchronizing circuit for timing adjustment, buffer circuit 37 to buffer the output of flip-flop circuit 34, and sleep control register 38.

Moreover, interrupt controller 39, reset controller 40, and data bus 41 are installed as the peripheral circuit of CPU 10. Interrupt controller 39 outputs interrupt signals INT and NMI (non-maskable interrupt) when data is input from keyboard 11 or access is made for I/O device 15. Reset controller 40 outputs the system rest signal $\overline{RESET}$.

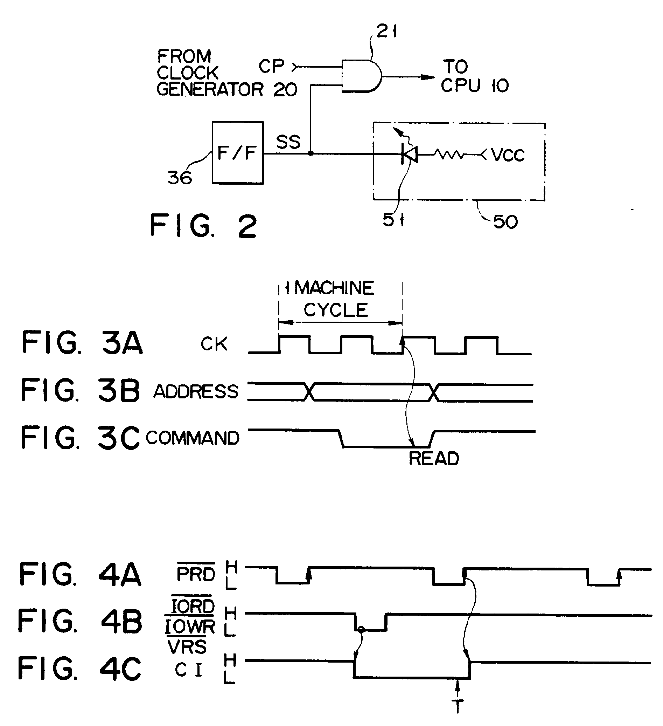

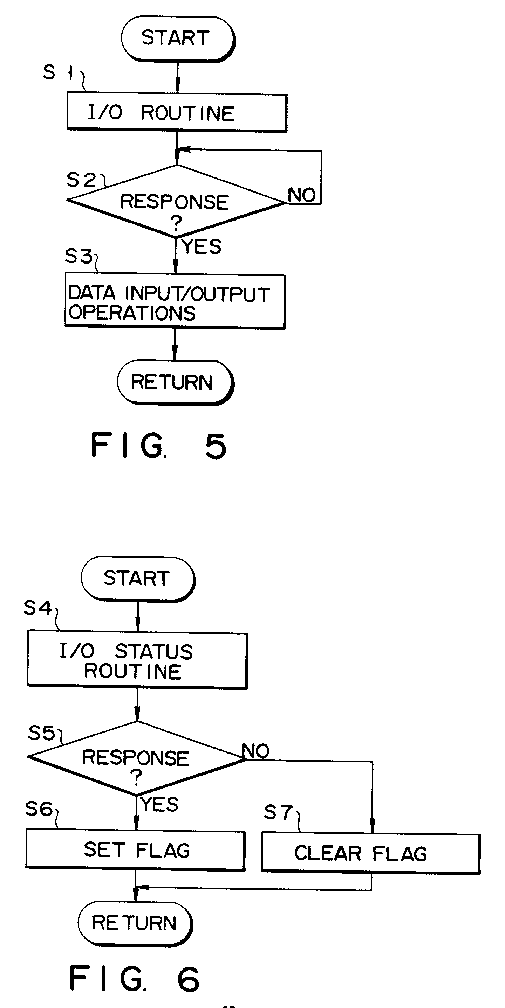

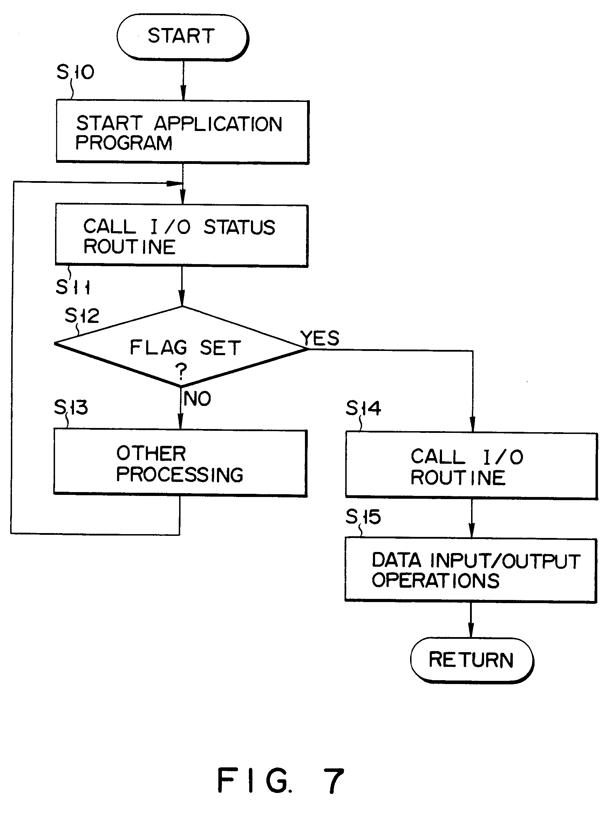

The following describes the operation of the said embodiment according to Figs. 5 through 8. When the system power source (battery) is turned on, clock generator 20 of clock control circuit operates to generate the clock pulse CP. In this case, the control signal SS with the logic level "H" is output from sleep mode logic circuit 17 under the normal operation mode in which the sleep mode function does not operate. Therefore, as shown in Fig. 1, AND gate 21 transfers the clock pulse CP to the clock terminal CK of CPU 10. By this, CPU 10 executes normal data processing at the machine cycle shown in Figs. 3A through 3C, for example, synchronously with the clock pulse CK (CP). In this case, data input/output operation is controlled by BIOS in the system when CPU 10 executes the application program. BIOS, as shown in Fig. 5, executes data input/output operation (step 3) if it receives a response (access) from keyboard 11 and I/O device 15 (YES in step 2). BIOS, as shown in Fig. 6, sets a flag (input/output control flag by software) (step 6) through the I/O status routine which is a subroutine if it receives a response from keyboard 11 and I/O device 15 (YES in step 5). Unless BIOS receives any response (NO in step S5), it clears the flag (step S7). Meanwhile, if the application program is started, it calls the I/O status routine of BIOS, as shown in Fig. 7, and decision on whether or not a flag is set is executed (step S12). If the flag is set (step S14), the application program calls the I/O routine of BIOS (step S14) and the I/O routine executes data input/output operation (step S15). Unless the flag is set (NO in step S12), the application program executes a processing other than usual data processing (e.g. processing to indicate the clock mode on the screen of the display unit) because data input/output operation is not executed (step S13). Step S13 includes the case in which no processing is executed. That is, in step 13, the state may occur in which CPU 10 does not execute effective data processing (idle). This invention purposes execution of the sleep mode function if CPU 10 is idle according to decision on whether or not CPU 10 is idle through the logic circuit shown in Fig. 1.

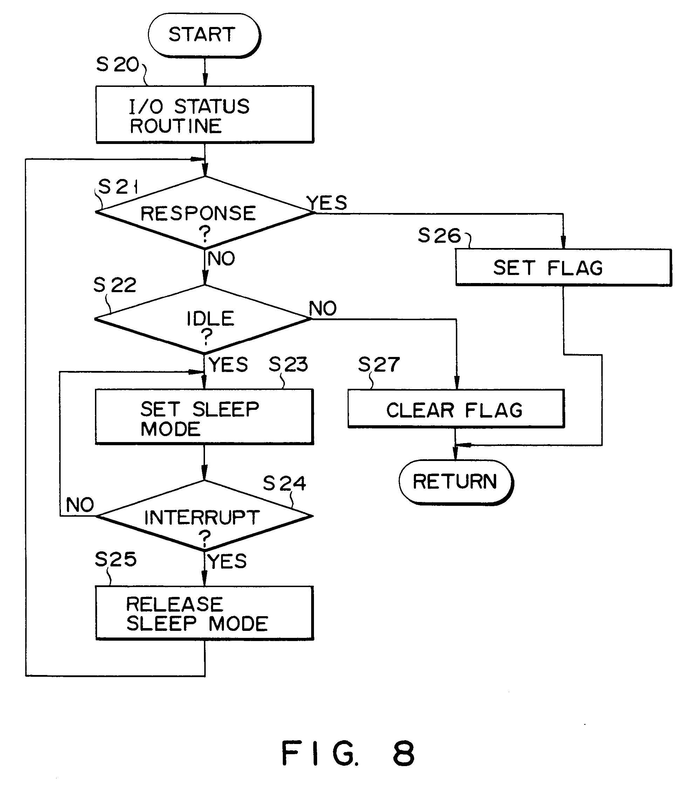

Concretely, this invention purposes addition of step 22 to decide whether CPU 10 is idle the I/O status routine of BIOS as shown in Fig. 8. Decision on whether or not CPU 10 is idle is made by the data CI read from buffer 37 through data bus 41 by CPU 10 to designate idle state. The data CI is latched by flip-flop circuit 34 as shown in Fig. 1. Flip-flop circuit 34 latches that data CI with the logic level "H" at the leading edge of the I/O-port (I/O device 15) read control signal $\overline{PRD}$ output from AND gate 30 with the timing shown in Fig. 4A. Flip-flop circuit 34 is set by the signal (logic level "H") output from OR gate 27. OR gate 27 outputs the signal (logic level "L") to reset flip-flop circuit 34 when any one of the signal $\overline{VRS}$ with the logic level "L", I/O read control signal $\overline{IORD}$, and I/O write control signal $\overline{IOWR}$ is output by the logic circuit comprising OR gates 25 and 26, AND gates 31 and 32, and NAND gate 33. That is, flip-flop circuit 34 is reset when the memory functioning as the video RAM or I/O device 15 is accessed (presence of response). In other words, unless flip-flop circuit 34 is reset, the memory or I/O device 15 is not accessed and CPU 10 is idle. OR gate 27 outputs the signal to reset flip-flop circuit 34 when the sleep inhibit signal $\overline{SD}$ is input from sleep control register 38 or the system reset signal $\overline{RESET}$ is input from reset controller 40. Sleep control register 38 is the register to store the data to inhibit the sleep mode input by the user using the setup screen of the system.

CPU 10, as shown in Fig. 4C, reads the data CI with the logic level "H" latched by flip-flop circuit 34 at the point of time slightly before the leading edge of the read control signal $\overline{PRD}$. Therefore, as shown in Fig. 8, when CPU 10 reads the data CI in the I/O status routine of BIOS, it is decided that CPU 10 is idle (YES in step 22). By this, BIOS sets the sleep mode (step S23). That is, CPU 10 outputs the control signal for the sleep mode to function and makes AND gate 29 shown in Fig. 1 output the sleep pulse SP. Flip-flop circuit 35 latches the data to designate the sleep mode synchronously with the sleep pulse SP and outputs the signal Q with the logic level "H". Flip-flop circuit 36 outputs the control signal SS which is the sleep mode signal with the logic level "L" according to the signal output from flip-flop circuit 35. The control signal SS is delayed by the prescribed time by flip-flop circuit 36 and transferred to the gate control terminal of AND 35 gate 21. AND gate 21 inhibits transfer of the clock pulse CP from clock generator 20 to stop feeding the clock pulse to CPU 10. CPU 10 executes the sleep mode processing to output the sleep pulse SP through flip-flop circuit 36 which is a synchronizing circuit, before feeding the clock pulse CP to CPU 10 stopped. Thus, the idle state in which CPU 10 does not execute effective processing is latched by flip-flop circuit 34, and read and detected by CPU 10. The sleep mode functions according to detection of idle state of CPU 10. When the sleep mode functions, feeding the clock pulse CP to CPU 10 is stopped. Therefore, the operation of CPU 10 stops. Therefore, the power consumption of the system is saved because the sleep mode to stop feeding the clock pulse CP to CPU 10 functions under the idle state in which CPU 10 does not execute effective processing.

As shown in Fig. 2, this system has indicator 50 to designate the state in which the sleep mode functions. Indicator 50 is equipped with a light emitting diode 51, which is the circuit to operate light emitting diode 51 according to the control signal SS with the logic level "L" sent from flip-flop circuit 36. This allows the user to visually confirm through indicator 50 that the system is in the sleep mode. As shown in step S23 in Fig. 8, if an interrupt processing (e.g. input of data by keyboard 11) is executed when the sleep mode is set YES in step S24), the sleep mode is released (step S25). That is, as shown in Fig. 1, if data is input by keyboard 11, interrupt controller 39 outputs the interrupt signal $\overline{INT}$, interrupt signal $\overline{INT}$ is input to CPU 10 and OR gate 28. OR gate 28 outputs the signal to reset flip-flop circuit 35 when the interrupt signal $\overline{INT}$ is input. Thus, the data latched by flip-flop circuit 35 to designate the sleep mode is reset and the controls signal SS with the logic level "H" is transferred to the gate control terminal of AND gate 21. Therefore, AND gate 21 transfers the clock pulse CP output by clock generator 20 to feed it to CPU 10. In this case, OR gate 28 outputs the signal to reset flip-flop circuit 35 even if the signal $\overline{NMI}$ is input from interrupt controller 39 or the data request signal $\overline{DRQ}$ output from DMA controller 16 to CPU 10 is input.

For YES in step S21 and NO in step S22 in Fig. 8, BIOS sets or clears the flag as shown in Fig. 6. Moreover, as shown in Fig. 9, it is also possible to configure the system so that the low-frequency pulse LP will be fed to CPU 10 without stopping feed of the clock pulse CP in the sleep mode with clock frequency divider 60 and selector 61. That is, clock frequency divider 60 divides the high-frequency clock pulse CP output by clock generator 20 and outputs the low-frequency clock pulse LP for the sleep mode. Selector 61 normally feeds the clock pulse CP to CPU 10. Meanwhile, selector 61 changes the high-frequency clock pulse CP to the low-frequency clock pulse LP to feed it to CPU 10, according to the control signal SS with the logic level "L" sent from flip-flop circuit 36. That is, if the sleep mode is set, CPU 10 is operated by the low-frequency clock pulse LP. Thus, CPU 10 executes low-speed data processing requiring no high-speed operation in the sleep mode. Therefore, the system power consumption can be further saved compared with the case of normal high-speed operation.

As mentioned above, this invention allows the logic circuit which is hardware to decide the idle state in which CPU does not execute effective data processing. This makes it possible to execute the processing for the sleep mode to function when CPU 10 is idle in checking the I/O status with the I/O status routine of BIOS. Therefore, the sleep mode can effectively be operated even for execution of the application program considering no sleep mode. In other words, it is possible to eliminate the burden to provide the application program with the sleep mode function and effectively show the sleep mode function in the development of the program.

## Claims

1. A computer system with a sleep function, including processor means (10) constituting the central processing unit for said system, for executing various data processings, and I/O means (11, 15) to execute input/output of data, comprising:

   clock generator means (20) for generating the clock signal necessary for operation of the said processor means (10); and

   register means (34) for latching data to designate whether said processor means (10) is in an idle state,

   characterized by further comprising:

   transfer means (37, 41) for transferring the data latched in said register means (34) to said processor means (10) in response to a read operation ($\overline{PRD}$) of said processor means (10), and

   sleep control means (17,522,523) for setting the sleep mode according to said data transferred to said processor means (10), thereby either stopping the operation of said processor means (10) or decreasing its operation speed, by controlling the supply or the frequency of said clock signal to said processor means (10).

2. A system according to claim 1, comprising a logic circuit (27, 30, 34) having said register means (34) comprising a flip-flop circuit (34), which is set to designate said idle state, when said I/O means (11, 15) is not accessed within a certain period, and which is reset when said I/O means (11, 15) is accessed.

3. A system according to claim 1, characterized in that said sleep control means (17) has register means (35) to latch the data to designate the sleep mode when said processor means (10) reads the data latched in said register means (34) and the logic circuit (21) to stop the supply of said clock signal from said clock generator means (20) to said processor means (10), when the sleep mode is set.

4. A system according to claim 1, further comprising:

   an indicator (50) for visually designating that said system is in sleep mode when the sleep mode is set.

5. A system according to claim 1, characterized in that said sleep control means (17) has clock frequency dividing means (60) to generate a low-frequency clock signal obtained by dividing said clock signal sent from said clock generator means (20), and further has selecting means (61) to supply to said processor means (10) said low-frequency clock signal when the sleep mode is set, otherwise to supply said clock signal sent from said clock generator means (20).

6. A system according to claim 2, characterized in that said transfer means (37, 41) transfers the data latched by said flip-flop circuit (34) of said register means (34) to said processor means (10) according to the read operation of said processor means (10).

7. A system according to claim 3, characterized in that said sleep control means (17) has clearing means (28, 39) to clear the data latched by said sleep-mode register means (35) when an interrupt signal output by said I/O means (11, 15) is input.

## Patentansprüche

1. Ein Rechnersystem mit einer Schlaffunktion, welches ein Verarbeitungsmittel (10), das die zentrale Verarbeitungseinheit für das System bildet, um verschiedene Datenverarbeitungen auszuführen, und I/O-Mittel (11,15) einschließt, um eine Eingabe/Ausgabe von Daten auszuführen, mit:

   Taktgebermittel (20), um das Taktsignal zu erzeugen, das für eine Operation des Verarbeitungsmittels (10) nowendig ist; und

   Speicher- bzw. Registermittel (34) zum Halten von Daten, um zu bestimmen, ob sich das Verarbeitungsmittel (10) in einem Ruhezustand befindet,

   gekennzeichnet, indem weiter umfassend:

   Übertragungsmittel (37, 41), um die Daten, die in dem Registermittel (34) gehalten werden, zu dem Verarbeitungsmittel (10) als Antwort auf eine Leseoperation ($\overline{PRD}$) des Verarbeitungsmittels (10) zu übertragen, und

   Schlafregelungsmittel (17, S22, S23), um den Schlafmodus gemäß der Daten einzustellen, die zu dem Verarbeitungsmittel (10) übertragen werden, wobei dadurch entweder die Operation des Verarbeitungsmittels (10) gestoppt bzw. unterbrochen oder dessen Operationsgeschwindigkeit verringert wird, indem die Zufuhr des Taktsignals zu oder die Frequenz des Taktsignals an dem Verarbeitungsmittel (10) geregelt wird.

2. Ein System nach Anspruch 1 mit einer logischen Schaltung (27, 30, 34), welche das Registermittel (34) mit einer Flip-Flop-Schaltung (34) enthält, die eingestellt wird, um den Ruhezustand zu bestimmen, wenn auf das I/O-Mittel (11, 15) innerhalb einer bestimmten Periode nicht zugegriffen wird, und die zurückgestellt wird, wenn auf das I/O-Mittel (11,15) zugegriffen wird.

3.　Ein System nach Anspruch 1, dadurch gekennzeichnet, daß das Schlafregelungsmittel (17) ein Registermittel (35) besitzt, um die Daten zu halten, um den Schlafmodus zu bestimmen, wenn das Verarbeitungsmittel (10) die Daten liest, die in dem Registermittel (34) gehalten werden, und die logische Schaltung (21), um die Zufuhr des Taktsignals von dem Taktgebermittel (20) zu dem Verarbeitungsmittel (10) zu stoppen bzw. zu unterbrechen, wenn der Schlafmodus eingestellt ist.

4.　Ein System nach Anspruch 1, ferner umfassend: eine Anzeigevorrichtung (50), um visuell zu bestimmen, daß sich das System in einem Schlafmodus befindet, wenn der Schlafmodus eingestellt ist.

5.　Ein System nach Anspruch 1, dadurch gekennzeichnet, daß das Schlafregelungsmittel (17) ein Taktfrequenz-Teilungsmittel (60) besitzt, um ein Niederfrequenz-Taktsignal zu erzeugen, das erhalten wird, indem das Taktsignal geteilt wird, welches von dem Taktgebermittel (20) gesendet wird, und weiter ein Auswahlmittel (61) besitzt, um das Niederfrequenz-Taktsignal dem Verarbeitungsmittel (10) zuzuführen, wenn der Schlafmodus eingestellt ist, oder um andernfalls das Taktsignal zuzuführen, das von dem Taktgebermittel (20) gesendet wird.

6.　Ein System nach Anspruch 2, dadurch gekennzeichnet, daß das Übertragungsmittel (37, 41) die Daten, die durch die Flip-Flop-Schaltung (34) des Registermittels (34) gehalten werden, zu dem Verarbeitungsmittel (10) gemäß der Leseoperation des Verarbeitungsmittels (10) überträgt.

7.　Ein System nach Anspruch 3, dadurch gekennzeichnet, daß das Schlafregelungsmittel (17) ein Löschmittel (28, 39) besitzt, um die Daten zu löschen, die durch das Schlafmodus-Registermittel (35) gehalten werden, wenn ein durch das I/O-Mittel (11, 15) ausgegebenes Unterbrechungssignal eingegeben wird.

**Revendications**

1.　Système d'ordinateur avec une fonction de veille, comprenant des moyens formant processeur (10) constituant l'unité centrale de traitement pour ledit système, pour exécuter différents traitements de données, et des moyens d'entrée/sortie (11, 15) pour exécuter des entrées/sorties de données, comprenant:
- des moyens formant générateur de signal d'horloge (20) pour produire le signal d'horloge nécessaire au fonctionnement desdits moyens formant processeur (10); et
- des moyens formant registre (34) pour verrouiler une donnée pour indiquer si lesdits moyens formant processeur (10) sont dans un état d'inactivité,

　　caractérisé en ce qu'il comprend en outre:
- des moyens de transfert (37, 41) pour tranférer la donnée verrouillée dans lesdits moyens formant registre (34) en réponse à une opération de lecture (PRD) desdits moyens formant processeur (10); et
- des moyens de commande de veille (17, S22, S23) pour sélectionner le mode de veille selon ladite donnée transférée auxdits moyens formant processeur (10) en arrêtant ainsi le fonctionnement desdits moyens formant processeur (10) ou en diminuant leur vitesse de fonctionnement en commandant la fourniture ou la fréquence dudit signal d'horloge auxdits moyens formant processeur (10).

2.　Système d'ordinateur selon la revendication 1, comprenant un circuit logique (27, 30, 34) ayant lesdits moyens formant registre (34) comprenant un circuit à bascule (34) qui est mis à 1 pour désigner ledit état d'inactivité lorsque lesdits moyens d'entrée/sortie (11, 15) ne sont pas accédés dans une certaine période, et qui est remis à zéro quand lesdits moyens d'entrée/sortie (11, 15) sont accédés.

3.　Système d'ordinateur selon la revendication 1, caractérisé en ce que lesdits moyens de commande de veille (17) ont des moyens formant registre (35) pour verrouiller la donnée pour indiquer le mode de veille lorsque lesdits moyens formant processeur (10) lisent la donnée verrouillée dans lesdits moyens formant registre (34) et le circuit logique (21) pour arrêter la fourniture dudit signal d'horloge issu desdits moyens formant générateur de signal d'horloge (20) auxdits moyens formant processeur (10) lorsque le mode de veille est sélectionné.

4.　Système d'ordinateur selon la revendication 1, comprenant en outre:
- un indicateur (50) pour indiquer visuellement que ledit système d'ordinateur est en mode de veille lorsque le mode de veille est sélectionné.

5. Système d'ordinateur selon la revendication 1, caractérisé en ce que lesdits moyens de commande de veille (17) ont des moyens diviseurs de fréquence d'horloge (60) pour produire un signal d'horloge à basse frréquence obtenu en divisant ledit signal d'horloge envoyé à partir desdits moyens générateurs de signal d'horloge (20), et a en outre des moyens de sélection (61) pour fournir auxdits moyens formant processeur (10) ledit signal d'horloge à basse fréquence lorsque le mode de veille est sélectionné, autrement pour fournir ledit signal d'horloge envoyé à partir desdits moyens générateurs de signal d'horloge (20).

6. Système d'ordinateur selon la revendication 2, caractérisé en ce que lesdits moyens de transfert (37, 41) transfèrent la donnée verrouillée par ledit circuit à bascule (34) desdits moyens formant registre (34) auxdits moyens formant processeur (10) selon l'opération de lecture desdits moyens formant processeur (10).

7. Système selon la revendication 3, caractérisé en ce que lesdits moyens de commande de veille (17) ont des moyens d'effacement (28, 39) pour effacer la donnée verrouillée par lesdits moyens formant registre de mode de veille (35) lorsqu'un signal d'interruption fourni par lesdits moyens d'entrée/sortie (11, 15) est appliqué en entrée.

FIG. 1

EP 0 421 431 B1

EP 0 421 431 B1

FIG. 2

FIG. 3A  CK

FIG. 3B ADDRESS

FIG. 3C COMMAND

FIG. 4A  $\overline{\text{PRD}}$

FIG. 4B  $\overline{\text{IORD}}$ / $\overline{\text{IOWR}}$

FIG. 4C  VRS / C I

START

S1 — I/O ROUTINE

S2 — RESPONSE ? — NO

YES

S3 — DATA INPUT/OUTPUT OPERATIONS

RETURN

FIG. 5

START

S4 — I/O STATUS ROUTINE

S5 — RESPONSE ? — NO

YES

S6 — SET FLAG

S7 — CLEAR FLAG

RETURN

FIG. 6

START

S10
START APPLICATION
PROGRAM

CALL I/O STATUS
ROUTINE

S11

S12
FLAG SET
?
YES

NO

S13
OTHER
PROCESSING

S14
CALL I/O
ROUTINE

S15
DATA INPUT/OUTPUT
OPERATIONS

RETURN

FIG. 7

11

START

S 20

I/O STATUS
ROUTINE

S 21

RESPONSE
? — YES

NO

S 22

IDLE
? — NO

YES   S 23

SET SLEEP
MODE

S 24

NO — INTERRUPT
?

YES

S 25

RELEASE
SLEEP MODE

S 26

SET FLAG

S 27

CLEAR FLAG

RETURN

F I G.  8

F I G. 9

F I G. 10